# EUROPEAN PATENT APPLICATION

(11) **EP 1 925 439 A2**
(43) Date of publication of application: **28.05.2008**
(21) Application number: 07022057.9
(22) Date of filing: 13.11.2007
(51) Int. Cl.: B29D 11/00, G02B 5/30

(54) **Method for producing polarizing plate, polarizing plate, optical film, and image display**

(30) Priority: 20.11.2006 JP 2006313103
(71) Applicant: Nitto Denko Corporation, Ibaraki-shi, Osaka 567-8680 (JP)
(72) Inventor: Tomoguchi, Naoki, Ibaraki-shi Osaka 567-8680 (JP); Sugino, Youichirou, Ibaraki-shi Osaka 567-8680 (JP); Iwamoto, Nobuaki, Ibaraki-shi Osaka 567-8680 (JP); Yamazoe, Masahiro, Ibaraki-shi Osaka 567-8680 (JP); Takao, Hiroyuki, Ibaraki-shi Osaka 567-8680 (JP)
(74) Representative: Müller-Boré & Partner Patentanwälte

(57) **Abstract**

A method for producing a polarizing plate of the invention comprises a step of bonding a transparent protective film to at least one side of a polarizer with an adhesive, wherein the polarizer is a polyvinyl alcohol-based polarizer, the transparent protective film has a water-vapor permeability of 150 g/m²/24 hours or less, the adhesive is a water-based adhesive, and before bonding the polarizer and the transparent protective film with the adhesive, the polarizer is subjected to an air blowing process such that the surface of the polarizer has a contact angle of 20° or more for water. The method can produce a polarizing plate with a high polarization degree.

## Description

The present invention relates to a method for producing a polarizing plate. The invention also relates to a polarizing plate obtained by the production method. The polarizing plate may be used alone or in the form of a laminate serving as an optical film to form an image display such as a flat panel display such as a liquid crystal display (hereinafter abbreviated as "LCD") or an electroluminescence display (hereinafter abbreviated as "ELD"), or a plasma display panel (PDP).

Polarizing plates for use in flat panel displays, especially for use in LCDs, generally use a polyvinyl alcohol-based film as a main raw material. Polarizing plates that are preferably used are produced by a process including the steps of stretching a polyvinyl alcohol-based film containing a dichroic material such as iodine so as to provide sufficient optical properties for LCDs and bonding a transparent protective film to the stretched film. The polyvinyl alcohol-based polarizers are produced through stretching and thus can easily shrink. The PVA-based film uses a hydrophilic polymer and thus is very apt to be deformed especially under humidified conditions. The mechanical strength of the film itself is also low, and, therefore, there is a problem in which the film can be torn. Thus, there are used polarizing plates reinforced by bonding a transparent protective film to one or both sides of the polarizer. Such polarizing plates are produced by bonding the polarizer and the transparent protective film together with an adhesive. A polyvinyl alcohol-based adhesive, which is mainly an aqueous solution, is generally used for bonding between triacetylcellulose and the polyvinyl alcohol-based polarizer.

High definition and high performance of LCDs require improvements in screen uniformity and quality. Since the usage environment is diversified, there are also demands for high heat resistance, resistance to heat and humidity, water resistance, and so on. Based on such required properties for LCDs, polarizing plates for use in LCDs are required to have high durability as polarizers.

Triacetylcellulose is generally used for the transparent protective film for use in the polarizing plates. However, triacetylcellulose does not have sufficient resistance to heat and humidity. Triacetylcellulose films can also produce a retardation for obliquely incident light. As the size of liquid crystal displays increases in recent years, such a retardation significantly influences viewing angle characteristics. In order to solve the above problems, a cyclic olefin resin is proposed as a material for the transparent protective film in place of triacetylcellulose. Such a cyclic olefin resin has low water-vapor permeability and almost no retardation in oblique directions.

However, the polarization degree of a polarizing plate that is obtained by bonding a polyvinyl alcohol-based polarizer and a less water-vapor-permeable transparent protective film such as a cyclic olefin resin film together with a polyvinyl alcohol-based adhesive is lower than the polarization degree of a polarizing plate using a triacetylcellulose film as a transparent protective film.

For example, there is proposed a method of bonding a cyclic olefin resin-based transparent protective film to a polyvinyl alcohol-based polarizer with an acrylic pressure-sensitive adhesive layer interposed therebetween (see JP-A No. 05-212828). However, this method requires heating and pressing for bonding and has a long heating time and thus has a problem in which the polyvinyl alcohol polarizer can be discolored and the polarization degree can be significantly reduced. Because of the need for long time heating, this method also has a problem in which the production efficiency is low and the film can be deformed.

It is an object of the invention to provide a method for producing a polarizing plate that includes using a polyvinyl alcohol-based polarizer, using a less water-vapor-permeable material for a transparent protective film and bonding them together with a water-based adhesive and can produce a polarizing plate with a high polarization degree.

It is another object of the invention to provide a polarizing plate obtained by such a production method. It is a further object of the invention to provide an optical film comprising a laminate including the polarizing plate and to provide an image display, such as an LCD and an ELD, using the polarizing plate or the optical film.

As a result of active investigations for solving the above problems, the inventors have found that the above objects can be achieved by the polarizing plate production method described below and thus have completed the invention. Specifically, the invention is as follows:

The invention relates to a method for producing a polarizing plate, comprising a step of bonding a transparent protective film to at least one side of a polarizer with an adhesive, wherein
the polarizer is a polyvinyl alcohol-based polarizer,
the transparent protective film has a water-vapor permeability of 150 g/m²/24 hours or less,
the adhesive is a water-based adhesive, and
before bonding the polarizer and the transparent protective film with the adhesive, the polarizer is subjected to an air blowing process such that the surface of the polarizer has a contact angle of 20° or more for water.

In the method for producing the polarizing plate, the adhesive preferably forms a layer with a thickness of 30 nm to 200 nm.

In the method for producing the polarizing plate, the air blowing process is preferably performed by blowing air at a speed of 2 to 10 m/ second on the polarizer.

In the method for producing the polarizing plate, the air blowing process is preferably controlled such that the resulting polarizer has a moisture content of 10% to 40% by weight.

The invention also relates to a polarizing plate produced by the above production method.

The invention also relates to an optical film, comprising at least one laminated piece of the above polarizing plate.

The invention also relates to an image display, comprising the above polarizing plate or the above optical film.

In a conventional polarizing plate production method using a polyvinyl alcohol-based polarizer and a less water-vapor-permeable material for a transparent protective film, a polarizing plate is produced by bonding the polarizer and the protective film together with a water-based adhesive such as a polyvinyl alcohol-based adhesive. It has been concluded that in this bonding process, the water-based adhesive permeates to the polarizer side and penetrates into the polarizer, because the transparent protective film has a low water-vapor permeability, and as a result, the alignment of iodine in the polyvinyl alcohol-based polarizer can be disordered so that the polarization degree and other optical properties of the resulting polarizing plate can be lower than those of a polarizing plate using a triacetylcellulose film or the like as a transparent protective film.

In the polarizing plate production method of the invention using a polyvinyl alcohol-based polarizer and a less water-vapor-permeable material for a transparent protective film, therefore, the polarizer is subjected to an air blowing process before the polarizer and the transparent protective film are bonded together with a water-based adhesive such as a polyvinyl alcohol-based adhesive, so that the surface of the polarizer is sufficiently dried to have a contact angle of 20° or more for water, which prevent the water component of the water-based adhesive from penetrating into the polarizer. According to the production method of the invention, therefore, the polyvinyl alcohol-based polarizer can be prevented from absorbing moisture even when a less water-vapor-permeable material is used for the transparent protective film, so that a polarizing plate with good optical properties can be obtained.

A polarizer used in the method of the invention is polyvinyl alcohol-based polarizer. As the polarizer, for example, a film that is uniaxially stretched after having dichromatic substances, such as iodine and dichromatic dye, absorbed to hydrophilic high molecular weight polymer films, such as polyvinyl alcohol type film, partially formalized polyvinyl alcohol type film, and ethylene-vinyl acetate copolymer type partially saponified film, etc. may be mentioned. In these, a polyvinyl alcohol type film comprises dichromatic materials such as iodine, dichromatic dye is suitably used. Although thickness of polarizer is not especially limited, the thickness of about 5 to about 80 µm is commonly adopted.

A polyvinyl alcohol-based film can be formed by means of one of various methods such as a flow method in which a master liquid obtained by dissolving a polyvinyl alcohol-based resin into water or an organic solvent is caused to flow to form a film, a cast method and an extrusion method, and a film formed with a method can be properly employed. A polymerization degree of a polyvinyl alcohol-based resin is preferably in the range of from about 100 to about 5000 and more preferably in the range of from about 1400 to about 4000.

A polarizer obtained by uniaxially stretching a polyvinyl alcohol-based film after being dyed with iodine or the like can be manufactured by means of the following method:

In the dyeing step, a polyvinyl alcohol-based film is immersed in a dyeing bath to which iodine is added at a temperature of in the range of from about 20 to about 70°C for a time in the range of from about 1 to about 20 minutes to thereby cause iodine to be adsorbed. An iodine concentration in the dyeing bath is usually in the range of from about 0.1 to about 1 part by weight relative to 100 parts by weight of water.
A assistant may be added in the dyeing bath in the range of from about 0.02 to about 20 parts by weight and preferably in the range of 2 to 10 parts by weight; example of the assistant include: iodides such as potassium iodine, lithium iodide, sodium iodide, zinc iodide, aluminum iodide, lead iodide, copper iodide, barium iodide, calcium iodide, tin iodide and titanium iodide. The additives are especially preferable in order to enhance a dyeing efficiency. An organic solvent compatible with water can be contained in a small content.

A polyvinyl alcohol-based film may also be subjected to a swelling treatment in a water bath or the like at a temperature in the range of from about 20 to about 60°C for a time in the range of about 0.1 to about 10 minutes before being dyed in a water bath containing iodine or a dichroic dye. Washing a polyvinyl alcohol-based film also exerts an effect of preventing non-uniformity such as unevenness in dyeing by swelling the polyvinyl alcohol-based film in addition to effects that contaminants and a blocking preventive agent on a surface of the polyvinyl alcohol-based film can be cleaned.

A polyvinyl alcohol-based film to which a dyeing treatment is applied can be crosslinked if necessary. A composition of a crosslinking aqueous solution conducting a crosslinking treatment is such that crosslinking agents such as boric acid, borax, glyoxal and glutaric aldehyde are usually either alone or in mixture added in the range of from about 1 to about 10 parts by weight relative to 100 parts by weight of water. A concentration of a cross linking agent is determined in consideration of a balance between optical characteristics and shrinkage of a polarizing plate caused by a stretching force generated in the polyvinyl alcohol-based film.

An assistant may be added into a crosslinking bath in the range of 0.05 to 15 parts by weight and preferably in the range of from 0.5 to 8 weight %; examples of the assistant includes: iodides such as potassium iodine, lithium iodide, sodium iodide, zinc iodide, aluminum iodide, lead iodide, copper iodide, barium iodide, calcium iodide, tin iodide and titanium iodide. The additives are especially preferable since uniform in-plane characteristics of a polarizer can be obtained. A temperature of an aqueous solution is usually in the range of from about 20 to about 70°C and preferably in the range of from 40 to 60°C. No specific limitation is imposed on an immersion time, but an immersion time is usually in the range of from about 1 second to about 15 minutes and preferably in the range of from 5 seconds to 10 minutes. An organic solvent compatible with water may be contained in a small quantity in addition to a water solvent.

A total stretch magnification of a polyvinyl alcohol-based film is about 3 to about 7 times, preferably 5 to 7 times as large as the original length. If a total stretch magnification exceeds 7 times, the film is easier to be broken. Stretching may be conducted after being dyed with iodine, while being dyed or while being crosslinked, or followed by dyeing with iodine. A stretching method and the number of times of stretching are not specifically limited and stretching may be conducted only in one step. Alternatively, plural times of stretching may be conducted in the same step.

A polyvinyl alcohol-based film to which an iodine adsorption orientation treatment is applied can be further subjected to a step of immersing the film in an aqueous solution of an iodide such as potassium iodide with a concentration in the range of from 0.1 to 10 mass % at a temperature in the range of from about 10 to about 60°C and preferably on the order in the range of from 30 to 40°C for a time in the range of from 1 second to 1 minute. An assistant such as zinc sulfate or zinc chloride may be added into an iodide aqueous solution. A polyvinyl alcohol-based film to which an iodine adsorption orientation treatment is applied can be subjected to water washing step and a drying step.

In the production method of the invention, a less water-vapor-permeable material with a water-vapor permeability of 150 g/m²/24 hours or less should be used for the transparent protective film. The water-vapor permeability is preferably from 0 to 140 g/m²/24 hours, more preferably from 0 to 120 g/m²/24 hours. Examples of such a less water-vapor-permeable material that can be used include polycarbonate polymers; arylate polymers; polyester polymers such as polyethylene terephthalate and polyethylene naphthalate; amide polymers such as nylons and aromatic polyamides; polyolefin polymers such as polyethylene, polypropylene and ethylene-propylene copolymers; cyclic olefin resins having a cyclo system or a norbornene structure; and any mixture thereof.

Moreover, as is described in JP-A No. 2001-343529 (WO 01/37007), polymer films, for example, resin compositions including (A) thermoplastic resins having substituted and/or non-substituted imido group in sidechain, and (B) thermoplastic resins having substituted and/or non-substituted phenyl and nitrile group in sidechain may be mentioned. As an illustrative example, a film may be mentioned that is made of a resin composition including alternating copolymer comprising iso-butylene and N-methyl maleimide, and acrylonitrile-styrene copolymer. A film comprising mixture extruded article of resin compositions etc. may be used. Lactone ring-containing acrylic resins (the resins disclosed in JP-A No. 2005-146084) may also be used.

Among the above less water-vapor-permeable materials, cyclic olefin resins are particularly preferred. "Cyclic olefin resin" is a generic name and specifically described, for example, in JP-A Nos. 03-14882 and 03-122137. Examples include ring-opened polymers of cyclic olefins, addition polymers of cyclic olefins, random copolymers of cyclic olefins and α-olefins such as ethylene and propylene, and graft modifications thereof, which are modified with an unsaturated carboxylic acid, a derivative thereof or the like. Examples thereof also include hydrides of the above. Examples of the cyclic olefins include, but are not limited to, norbornene, tetracyclododecen, and derivatives thereof. Commercially available examples of resins include Zeonex and Zeonor series manufactured by Zeon Corporation, Arton series manufactured by JSR Corporation, and Topas series manufactured by Ticona.

Thickness values of the transparent protective film can be properly determined and generally on the order in the range of from about 1 to about 500 µm from the viewpoint of a strength, workability such as handlability, requirement for a thin film and the like. Especially, the thickness values are preferably is in the range of from 1 to 300 µm and more preferably in the range of from 5 to 200 µm.

An easy adhesion treatment can be applied onto a surface of a transparent protective film which is adhered to a polarizer.
Examples of easy adhesion treatments include: dry treatments such as a plasma treatment and a corona treatment; chemical treatment such as alkaline treatment; and a coating treatment in which an easy adhesion layer is formed. Among them, preferable are a coating treatment and an alkaline treatment each forming an easy adhesion layer. In formation of an easy adhesion layer, there can be used each of various kinds of easy adhesion materials such as a polyol resin, a polycarboxylic resin and a polyester resin. Note that a thickness of an easy adhesion layer is preferably usually from about 0.01 to about 10 µm, more preferably from about 0.05 to about 5 µm and especially preferably from about 0.1 to about 1 µm.

A hard coat layer may be prepared, or antireflection processing, processing aiming at sticking prevention, diffusion or anti glare may be performed onto the face on which the polarizing film of the above described transparent protective film has not been adhered.

A hard coat processing is applied for the purpose of protecting the surface of the polarizing plate from damage, and this hard coat film may be formed by a method in which, for example, a curable coated film with excellent hardness, slide property etc. is added on the surface of the protective film using suitable ultraviolet curable type resins, such as acrylic type and silicone type resins. Antireflection processing is applied for the purpose of antireflection of outdoor daylight on the surface of a polarizing plate and it may be prepared by forming an antireflection film according to the conventional method etc. Besides, a sticking prevention processing is applied for the purpose of adherence prevention with adjoining layer.

In addition, an anti glare processing is applied in order to prevent a disadvantage that outdoor daylight reflects on the surface of a polarizing plate to disturb visual recognition of transmitting light through the polarizing plate, and the processing may be applied, for example, by giving a fine concavo-convex structure to a surface of the protective film using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 µm, for example, such as inorganic type fine particles that may have conductivity comprising silica, alumina, titania, zirconia, tin oxides, indium oxides, cadmium oxides, antimony oxides, etc., and organic type fine particles comprising cross-linked of non-cross-linked polymers may be used. When forming fine concavo-convex structure on the surface, the amount of fine particle used is usually about 2 to 70 weight parts to the transparent resin 100 weight parts that forms the fine concavo-convex structure on the surface, and preferably 5 to 50 weight parts. An anti glare layer may serve as a diffusion layer (viewing angle expanding function etc.) for diffusing transmitting light through the polarizing plate and expanding a viewing angle etc.

In addition, the above-mentioned antireflection layer, sticking prevention layer, diffusion layer, anti glare layer, etc. may be built in the protective film itself, and also they may be prepared as an optical layer different from the protective film.

The polarizer and the transparent protective film are bonded to each other with a water-based adhesive. Examples of the water-based adhesive include isocyanate adhesives, polyvinyl alcohol adhesives, gelatin adhesives, vinyl latex adhesives, water-based polyurethane adhesives, and water-based polyester adhesives. In particular, polyvinyl alcohol adhesives are preferably used. The water-based adhesive may contain a crosslinking agent as needed.

The adhesive (such as a polyvinyl alcohol adhesive that may contain a crosslinking agent) is generally used in the form of an aqueous solution. The concentration of the aqueous solution should be, but not limited to, from 0.1 to 15% by weight, preferably from 0.5 to 10% by weight, more preferably from 0.5 to 5% by weight, in view of coatability, storage stability and the like.

The adhesive may also contain a coupling agent such as a silane coupling agent and a titanium coupling agent, any type of tackifier, an ultraviolet-absorbing agent, an antioxidant, a stabilizer such as a heat resistant stabilizer and a hydrolysis resistant stabilizer, or the like.

The polarizing plate of the invention is produced by bonding the polyvinyl alcohol-based polarizer and the transparent protective film together with the water-based adhesive. Before the polarizer and the transparent protective film are bonded to each other with the adhesive, the polarizer is subjected to an air blowing process such that the surface of the polarizer has a contact angle of 20° or more for water. If the contact angle is less than 20°, penetration of water into the polarizer cannot be suppressed so that it can be difficult to obtain a polarizer with good optical properties. The contact angle is preferably 21 ° or more, more preferably 22° or more. On the other hand, the contact angle is preferably 50° or less in view of adhesion.

In the production of the polarizer, the process of blowing air on the polarizer may be performed as a drying process after a cleaning process or may be performed as an additional process after the drying process. It should be noted, however, that the air blowing process is performed in order to allow the surface of the polarizer to have a contact angle of 20° or more as a result of sufficiently drying the surface of the polarizer, not in order to simply facilitate the drying of the polarizer. If the drying of the polarizer is simply facilitated without the air blowing process, rapture of the polarizer and so on can occur.

In the air blowing process, air is preferably blown at a speed of 2 to 10 m/second on the polarizer. A blowing speed of less than 2 m/ second is so low that it can be difficult to allow the surface of the polarizer to have a contact angle of 20° or more. On the other hand, a blowing speed of more than 10 m/ second is so high that the drying can excessively proceed and that rapture of the polarizer can occur to make it impossible to form a polarizer film. In the air blowing process, the blowing speed is preferably from 3 to 8 m/ second, more preferably from 4 to 8 m/ second.

When the transparent protective film is bonded to one side of the polarizer, one or both side(s) of the polarizer may be subjected to the air blowing process. When the transparent protective film is bonded to both sides of the polarizer, however, both sides of the polarizer are subjected to the air blowing process. The air blowing process may be performed by a counter flow method. The distance between the polarizer and the air blowing means is preferably from about 10 to about 100 cm, more preferably from 10 to 50 cm. Specifically, the blowing speed is that in a drying oven or furnace and may be measured with a mini-vane digital anemometer.

The air blowing process may be performed at a temperature of about 20 to about 80°C, preferably of 25 to 60°C, more preferably of 30 to 50°C. If the temperature is less than 20°C, it can take a too long time to allow the surface of the polarizer to have a contact angle of 20° or more, which is not preferred in view of productivity. On the other hand, if the temperature exceeds 80°C, the drying can excessively proceed so that rapture of the polarizer can occur to make it impossible to form a polarizer film. In the air blowing process, the treatment may be performed for a time of about 0.5 to about 10 minutes, preferably of 1 to 7 minutes, more preferably of 2 to 5 minutes. In the air blowing process, the temperature and the treatment time are controlled in view of the relationship with the blowing speed such that the surface of the polarizer is allowed to have a contact angle of 20° or more.

The air blowing process is preferably controlled such that the resulting polarizer has a moisture content of 10 to 40% by weight. The moisture content of the polarizer is preferably controlled to be from 15 to 30% by weight, more preferably controlled to be from 18 to 25% by weight.

In the method for producing the polarizing plate according to the invention, the polarizer that has undergone the air blowing process and the transparent protective film are bonded to each other with an adhesive. In this process, the adhesive may be applied to any one or both of the polarizer and the transparent protective film. Any of various coating methods such as a roll method, a spray method and a dipping method may be used for the application. The adhesive is preferably applied such that the adhesive layer formed after drying will have a thickness of about 30 to about 200 nm. The thickness of the adhesive layer is more preferably from 50 to 110 nm. With a thickness of less than 30 nm, the application can be sometimes difficult, and defects in the appearance can sometimes easily occur. If the thickness exceeds 200 nm, the amount of water retention can be sometimes large so that the optical properties can be degraded, which is not preferred.

After the adhesive is applied, the polarizer and the transparent protective film are bonded together using a roll laminator or any other means. After the bonding, a drying process may be performed so that an adhesive layer can be formed of a dried coating. The drying temperature may be from about 5 to about 150°C, preferably from 30 to 120°C, and the drying time may be 120 seconds or more, preferably 300 seconds or more.

A polarizing plate of the present invention may be used in practical use as an optical film laminated with other optical layers. Although there is especially no limitation about the optical layers, one layer or two layers or more of optical layers, which may be used for formation of a liquid crystal display etc., such as a reflector, a transflective plate, a retardation plate (a half wavelength plate and a quarter wavelength plate included), and a viewing angle compensation film, may be used. Especially preferable polarizing plates are; a reflection type polarizing plate or a transflective type polarizing plate in which a reflector or a transflective reflector is further laminated onto a polarizing plate of the present invention; an elliptically polarizing plate or a circular polarizing plate in which a retardation plate is further laminated onto the polarizing plate; a wide viewing angle polarizing plate in which a viewing angle compensation film is further laminated onto the polarizing plate; or a polarizing plate in which a brightness enhancement film is further laminated onto the polarizing plate.

A reflective layer is prepared on a polarizing plate to give a reflection type polarizing plate, and this type of plate is used for a liquid crystal display in which an incident light from a view side (display side) is reflected to give a display. This type of plate does not require built-in light sources, such as a backlight, but has an advantage that a liquid crystal display may easily be made thinner. A reflection type polarizing plate may be formed using suitable methods, such as a method in which a reflective layer of metal etc. is, if required, attached to one side of a polarizing plate through a transparent protective film etc.

As an example of a reflection type polarizing plate, a plate may be mentioned on which, if required, a reflective layer is formed using a method of attaching a foil and vapor deposition film of reflective metals, such as aluminum, to one side of a matte treated protective film. Moreover, a different type of plate with a fine concavo-convex structure on the surface obtained by mixing fine particle into the above-mentioned protective film, on which a reflective layer of concavo-convex structure is prepared, may be mentioned. The reflective layer that has the above-mentioned fine concavo-convex structure diffuses incident light by random reflection to prevent directivity and glaring appearance, and has an advantage of controlling unevenness of light and darkness etc. Moreover, the protective film containing the fine particle has an advantage that unevenness of light and darkness may be controlled more effectively, as a result that an incident light and its reflected light that is transmitted through the film are diffused. A reflective layer with fine concavo-convex structure on the surface effected by a surface fine concavo-convex structure of a protective film may be formed by a method of attaching a metal to the surface of a transparent protective film directly using, for example, suitable methods of a vacuum evaporation method, such as a vacuum deposition method, an ion plating method, and a sputtering method, and a plating method etc.

Instead of a method in which a reflection plate is directly given to the protective film of the above-mentioned polarizing plate, a reflection plate may also be used as a reflective sheet constituted by preparing a reflective layer on the suitable film for the transparent film. In addition, since a reflective layer is usually made of metal, it is desirable that the reflective side is covered with a protective film or a polarizing plate etc. when used, from a viewpoint of preventing deterioration in reflectance by oxidation, of maintaining an initial reflectance for a long period of time and of avoiding preparation of a protective layer separately etc.

In addition, a transflective type polarizing plate may be obtained by preparing the above-mentioned reflective layer as a transflective type reflective layer, such as a half-mirror etc. that reflects and transmits light. A transflective type polarizing plate is usually prepared in the backside of a liquid crystal cell and it may form a liquid crystal display unit of a type in which a picture is displayed by an incident light reflected from a view side (display side) when used in a comparatively well-lighted atmosphere. And this unit displays a picture, in a comparatively dark atmosphere, using embedded type light sources, such as a back light built in backside of a transflective type polarizing plate. That is, the transflective type polarizing plate is useful to obtain of a liquid crystal display of the type that saves energy of light sources, such as a back light, in a well-lighted atmosphere, and can be used with a built-in light source if needed in a comparatively dark atmosphere etc.

The above-mentioned polarizing plate may be used as elliptically polarizing plate or circularly polarizing plate on which the retardation plate is laminated. A description of the above-mentioned elliptically polarizing plate or circularly polarizing plate will be made in the following paragraph. These polarizing plates change linearly polarized light into elliptically polarized light or circularly polarized light, elliptically polarized light or circularly polarized light into linearly polarized light or change the polarization direction of linearly polarization by a function of the retardation plate. As a retardation plate that changes circularly polarized light into linearly polarized light or linearly polarized light into circularly polarized light, what is called a quarter wavelength plate (also called λ/4 plate) is used. Usually, half-wavelength plate (also called λ/2 plate) is used, when changing the polarization direction of linearly polarized light.

Elliptically polarizing plate is effectively used to give a monochrome display without above-mentioned coloring by compensating (preventing) coloring (blue or yellow color) produced by birefringence of a liquid crystal layer of a super twisted nematic (STN) type liquid crystal display. Furthermore, a polarizing plate in which three-dimensional refractive index is controlled may also preferably compensate (prevent) coloring produced when a screen of a liquid crystal display is viewed from an oblique direction. Circularly polarizing plate is effectively used, for example, when adjusting a color tone of a picture of a reflection type liquid crystal display that provides a colored picture, and it also has function of antireflection. For example, a retardation plate may be used that compensates coloring and viewing angle, etc. caused by birefringence of various wavelength plates or liquid crystal layers etc. Besides, optical characteristics, such as retardation, may be controlled using laminated layer with two or more sorts of retardation plates having suitable retardation value according to each purpose. As retardation plates, birefringence films formed by stretching films comprising suitable polymers, such as polycarbonates, norbornene type resins, polyvinyl alcohols, polystyrenes, poly methyl methacrylates, polypropylene; polyarylates and polyamides; aligned films comprising liquid crystal materials, such as liquid crystal polymer; and films on which an alignment layer of a liquid crystal material is supported may be mentioned. A retardation plate may be a retardation plate that has a proper retardation according to the purposes of use, such as various kinds of wavelength plates and plates aiming at compensation of coloring by birefringence of a liquid crystal layer and of visual angle, etc., and may be a retardation plate in which two or more sorts of retardation plates is laminated so that optical properties, such as retardation, may be controlled.

The above-mentioned elliptically polarizing plate and an above-mentioned reflected type elliptically polarizing plate are laminated plate combining suitably a polarizing plate or a reflection type polarizing plate with a retardation plate. This type of elliptically polarizing plate etc. may be manufactured by combining a polarizing plate (reflected type) and a retardation plate, and by laminating them one by one separately in the manufacture process of a liquid crystal display. On the other hand, the polarizing plate in which lamination was beforehand carried out and was obtained as an optical film, such as an elliptically polarizing plate, is excellent in a stable quality, a workability in lamination etc., and has an advantage in improved manufacturing efficiency of a liquid crystal display.

A viewing angle compensation film is a film for extending viewing angle so that a picture may look comparatively clearly, even when it is viewed from an oblique direction not from vertical direction to a screen. As such a viewing angle compensation retardation plate, in addition, a film having birefringence property that is processed by uniaxial stretching or orthogonal biaxial stretching and a biaxial stretched film as inclined alignment film etc. may be used. As inclined alignment film, for example, a film obtained using a method in which a heat shrinking film is adhered to a polymer film, and then the combined film is heated and stretched or shrunk under a condition of being influenced by a shrinking force, or a film that is aligned in oblique direction may be mentioned. The viewing angle compensation film is suitably combined for the purpose of prevention of coloring caused by change of visible angle based on retardation by liquid crystal cell etc. and of expansion of viewing angle with good visibility.

Besides, a compensation plate in which an optical anisotropy layer consisting of an alignment layer of liquid crystal polymer, especially consisting of an inclined alignment layer of discotic liquid crystal polymer is supported with triacetyl cellulose film may preferably be used from a viewpoint of attaining a wide viewing angle with good visibility.

The polarizing plate with which a polarizing plate and a brightness enhancement film are adhered together is usually used being prepared in a backside of a liquid crystal cell. A brightness enhancement film shows a characteristic that reflects linearly polarized light with a predetermined polarization axis, or circularly polarized light with a predetermined direction, and that transmits other light, when natural light by back lights of a liquid crystal display or by reflection from a back-side etc., comes in. The polarizing plate, which is obtained by laminating a brightness enhancement film to a polarizing plate, thus does not transmit light without the predetermined polarization state and reflects it, while obtaining transmitted light with the predetermined polarization state by accepting a light from light sources, such as a backlight. This polarizing plate makes the light reflected by the brightness enhancement film further reversed through the reflective layer prepared in the backside and forces the light re-enter into the brightness enhancement film, and increases the quantity of the transmitted light through the brightness enhancement film by transmitting a part or all of the light as light with the predetermined polarization state. The polarizing plate simultaneously supplies polarized light that is difficult to be absorbed in a polarizer, and increases the quantity of the light usable for a liquid crystal picture display etc., and as a result luminosity may be improved. That is, in the case where the light enters through a polarizer from backside of a liquid crystal cell by the back light etc. without using a brightness enhancement film, most of the light, with a polarization direction different from the polarization axis of a polarizer, is absorbed by the polarizer, and does not transmit through the polarizer. This means that although influenced with the characteristics of the polarizer used, about 50 percent of light is absorbed by the polarizer, the quantity of the light usable for a liquid crystal picture display etc. decreases so much, and a resulting picture displayed becomes dark. A brightness enhancement film does not enter the light with the polarizing direction absorbed by the polarizer into the polarizer but reflects the light once by the brightness enhancement film, and further makes the light reversed through the reflective layer etc. prepared in the backside to re-enter the light into the brightness enhancement film. By this above-mentioned repeated operation, only when the polarization direction of the light reflected and reversed between the both becomes to have the polarization direction which may pass a polarizer, the brightness enhancement film transmits the light to supply it to the polarizer. As a result, the light from a backlight may be efficiently used for the display of the picture of a liquid crystal display to obtain a bright screen.

A diffusion plate may also be prepared between brightness enhancement film and the above described reflective layer, etc. A polarized light reflected by the brightness enhancement film goes to the above described reflective layer etc., and the diffusion plate installed diffuses passing light uniformly and changes the light state into depolarization at the same time. That is, the diffusion plate returns polarized light to natural light state. Steps are repeated where light, in the unpolarized state, i.e., natural light state, reflects through reflective layer and the like, and again goes into brightness enhancement film through diffusion plate toward reflective layer and the like. Diffusion plate that returns polarized light to the natural light state is installed between brightness enhancement film and the above described reflective layer, and the like, in this way, and thus a uniform and bright screen may be provided while maintaining brightness of display screen, and simultaneously controlling non-uniformity of brightness of the display screen. By preparing such diffusion plate, it is considered that number of repetition times of reflection of a first incident light increases with sufficient degree to provide uniform and bright display screen conjointly with diffusion function of the diffusion plate.

The suitable films are used as the above-mentioned brightness enhancement film. Namely, multilayer thin film of a dielectric substance; a laminated film that has the characteristics of transmitting a linearly polarized light with a predetermined polarizing axis, and of reflecting other light, such as the multilayer laminated film of the thin film having a different refractive-index anisotropy ; an aligned film of cholesteric liquid-crystal polymer; a film that has the characteristics of reflecting a circularly polarized light with either left-handed or right-handed rotation and transmitting other light, such as a film on which the aligned cholesteric liquid crystal layer is supported; etc. may be mentioned.

Therefore, in the brightness enhancement film of a type that transmits a linearly polarized light having the above-mentioned predetermined polarization axis, by arranging the polarization axis of the transmitted light and entering the light into a polarizing plate as it is, the absorption loss by the polarizing plate is controlled and the polarized light can be transmitted efficiently. On the other hand, in the brightness enhancement film of a type that transmits a circularly polarized light as a cholesteric liquid-crystal layer, the light may be entered into a polarizer as it is, but it is desirable to enter the light into a polarizer after changing the circularly polarized light to a linearly polarized light through a retardation plate, taking control an absorption loss into consideration. In addition, a circularly polarized light is convertible into a linearly polarized light using a quarter wavelength plate as the retardation plate.

A retardation plate that works as a quarter wavelength plate in a wide wavelength ranges, such as a visible-light band, is obtained by a method in which a retardation layer working as a quarter wavelength plate to a pale color light with a wavelength of 550 nm is laminated with a retardation layer having other retardation characteristics, such as a retardation layer working as a half-wavelength plate. Therefore, the retardation plate located between a polarizing plate and a brightness enhancement film may consist of one or more retardation layers.

In addition, also in a cholesteric liquid-crystal layer, a layer reflecting a circularly polarized light in a wide wavelength ranges, such as a visible-light band, may be obtained by adopting a configuration structure in which two or more layers with different reflective wavelength are laminated together. Thus a transmitted circularly polarized light in a wide wavelength range may be obtained using this type of cholesteric liquid-crystal layer.

Moreover, the polarizing plate may consist of multi-layered film of laminated layers of a polarizing plate and two of more of optical layers as the above-mentioned separated type polarizing plate. Therefore, a polarizing plate may be a reflection type elliptically polarizing plate or a semi-transmission type elliptically polarizing plate, etc. in which the above-mentioned reflection type polarizing plate or a transflective type polarizing plate is combined with above described retardation plate respectively.

Although an optical film with the above described optical layer laminated to the polarizing plate may be formed by a method in which laminating is separately carried out sequentially in manufacturing process of a liquid crystal display etc., an optical film in a form of being laminated beforehand has an outstanding advantage that it has excellent stability in quality and assembly workability, etc., and thus manufacturing processes ability of a liquid crystal display etc. may be raised. Proper adhesion means, such as an adhesive layer, may be used for laminating. On the occasion of adhesion of the above described polarizing plate and other optical films, the optical axis may be set as a suitable configuration angle according to the target retardation characteristics etc.

In the polarizing plate mentioned above and the optical film in which at least one layer of the polarizing plate is laminated, a pressure-sensitive adhesive layer may also be prepared for adhesion with other members, such as a liquid crystal cell etc. As pressure sensitive adhesive that forms pressure-sensitive adhesive layer is not especially limited, and, for example, acrylic type polymers; silicone type polymers; polyesters, polyurethanes, polyamides, polyethers; fluorine type and rubber type polymers may be suitably selected as a base polymer. Especially, a pressure sensitive adhesive such as acrylics type pressure sensitive adhesives may be preferably used, which is excellent in optical transparency, showing adhesion characteristics with moderate wettability, cohesiveness and adhesive property and has outstanding weather resistance, heat resistance, etc.

Moreover, a pressure-sensitive adhesive layer with low moisture absorption and excellent heat resistance is desirable. This is because those characteristics are required in order to prevent foaming and peeling-off phenomena by moisture absorption, in order to prevent decrease in optical characteristics and curvature of a liquid crystal cell caused by thermal expansion difference etc. and in order to manufacture a liquid crystal display excellent in durability with high quality.

The pressure-sensitive adhesive layer may contain additives, for example, such as natural or synthetic resins, adhesive resins, glass fibers, glass beads, metal powder, fillers comprising other inorganic powder etc., pigments, colorants and antioxidants. Moreover, it may be a pressure-sensitive adhesive layer that contains fine particle and shows optical diffusion nature.

Proper method may be carried out to attach a pressure-sensitive adhesive layer to one side or both sides of the polarizing plate or the optical film. As an example, about 10 to about 40 weight % of the pressure-sensitive adhesive solution in which a base polymer or its composition is dissolved or dispersed, for example, toluene or ethyl acetate or a mixed solvent of these two solvents is prepared. A method in which this solution is directly applied on a polarizing plate top or an optical film top using suitable developing methods, such as flow method and coating method, or a method in which a pressure-sensitive adhesive layer is once formed on a separator, as mentioned above, and is then transferred on a polarizing plate or an optical film may be mentioned.

A pressure-sensitive adhesive layer may also be prepared on one side or both sides of a polarizing plate or an optical film as a layer in which pressure-sensitive adhesives with different composition or different kind etc. are laminated together. Moreover, when pressure-sensitive adhesive layers are prepared on both sides, adhesive layers that have different compositions, different kinds or thickness, etc. may also be used on front side and backside of a polarizing plate or an optical film. Thickness of a pressure-sensitive adhesive layer may be suitably determined depending on a purpose of usage or adhesive strength, etc., and generally is 1 to 500 µm, preferably 5 to 200 µm, and more preferably 10 to 100 µm.

A temporary separator is attached to an exposed side of a pressure-sensitive adhesive layer to prevent contamination etc., until it is practically used. Thereby, it can be prevented that foreign matter contacts pressure-sensitive adhesive layer in usual handling. As a separator, without taking the above-mentioned thickness conditions into consideration, for example, suitable conventional sheet materials that is coated, if necessary, with release agents, such as silicone type, long chain alkyl type, fluorine type release agents, and molybdenum sulfide may be used. As a suitable sheet material, plastics films, rubber sheets, papers, cloths, no woven fabrics, nets, foamed sheets and metallic foils or laminated sheets thereof may be used.

In addition, in the present invention, ultraviolet absorbing property may be given to the above-mentioned each layer, such as a polarizer, a transparent protective film for a polarizing plate and an optical film etc. and a pressure-sensitive adhesive layer, using a method of adding UV absorbents, such as salicylic acid ester type compounds, benzophenol type compounds, benzotriazol type compounds, cyano acrylate type compounds, and nickel complex salt type compounds.

A polarizing plate or an optical film of the present invention may be preferably used for manufacturing various equipment, such as liquid crystal display, etc. Assembling of a liquid crystal display may be carried out according to conventional methods. That is, a liquid crystal display is generally manufactured by suitably assembling several parts such as a liquid crystal cell, polarizing plates or optical films and, if necessity, lighting system, and by incorporating driving circuit. In the present invention, except that a polarizing plate or an optical film by the present invention is used, there is especially no limitation to use any conventional methods. Also any liquid crystal cell of arbitrary type, such as TN type, and STN type, π type may be used.

Suitable liquid crystal displays, such as liquid crystal display with which the above-mentioned optical film has been located at one side or both sides of the liquid crystal cell, and with which a backlight or a reflector is used for a lighting system may be manufactured. In this case, the optical film by the present invention may be installed in one side or both sides of the liquid crystal cell. When installing the optical films in both sides, they may be of the same type or of different type. Furthermore, in assembling a liquid crystal display, suitable parts, such as diffusion plate, anti-glare layer, antireflection film, protective plate, prism array, lens array sheet, optical diffusion plate, and backlight, may be installed in suitable position in one layer or two or more layers.

Subsequently, organic electro luminescence equipment (organic EL display) will be explained. Generally, in organic EL display, a transparent electrode, an organic emitting layer and a metal electrode are laminated on a transparent substrate in an order configuring an illuminant (organic electro luminescence illuminant). Here, an organic emitting layer is a laminated material of various organic thin films, and much compositions with various combination are known, for example, a laminated material of hole injection layer comprising triphenylamine derivatives etc., a luminescence layer comprising fluorescent organic solids, such as anthracene; a laminated material of electronic injection layer comprising such a luminescence layer and perylene derivatives, etc.; laminated material of these hole injection layers, luminescence layer, and electronic injection layer etc.

An organic EL display emits light based on a principle that positive hole and electron are injected into an organic emitting layer by impressing voltage between a transparent electrode and a metal electrode, the energy produced by recombination of these positive holes and electrons excites fluorescent substance, and subsequently light is emitted when excited fluorescent substance returns to ground state. A mechanism called recombination which takes place in an intermediate process is the same as a mechanism in common diodes, and, as is expected, there is a strong non-linear relationship between electric current and luminescence strength accompanied by rectification nature to applied voltage.

In an organic EL display, in order to take out luminescence in an organic emitting layer, at least one electrode must be transparent. The transparent electrode usually formed with transparent electric conductor, such as indium tin oxide (ITO), is used as an anode. On the other hand, in order to make electronic injection easier and to increase luminescence efficiency, it is important that a substance with small work function is used for cathode, and metal electrodes, such as Mg-Ag and Al-Li, are usually used.

In organic EL display of such a configuration, an organic emitting layer is formed by a very thin film about 10nm in thickness. For this reason, light is transmitted nearly completely through organic emitting layer as through transparent electrode. Consequently, since the light that enters, when light is not emitted, as incident light from a surface of a transparent substrate and is transmitted through a transparent electrode and an organic emitting layer and then is reflected by a metal electrode, appears in front surface side of the transparent substrate again, a display side of the organic EL display looks like mirror if viewed from outside.

In an organic EL display containing an organic electro luminescence illuminant equipped with a transparent electrode on a surface side of an organic emitting layer that emits light by impression of voltage, and at the same time equipped with a metal electrode on a back side of organic emitting layer , a retardation plate may be installed between these transparent electrodes and a polarizing plate, while preparing the polarizing plate on the surface side of the transparent electrode.

Since the retardation plate and the polarizing plate have function polarizing the light that has entered as incident light from outside and has been reflected by the metal electrode, they have an effect of making the mirror surface of metal electrode not visible from outside by the polarization action. If a retardation plate is configured with a quarter wavelength plate and the angle between the two polarization directions of the polarizing plate and the retardation plate is adjusted to π/4, the mirror surface of the metal electrode may be completely covered.

This means that only linearly polarized light component of the external light that enters as incident light into this organic EL display is transmitted with the work of polarizing plate. This linearly polarized light generally gives an elliptically polarized light by the retardation plate, and especially the retardation plate is a quarter wavelength plate, and moreover when the angle between the two polarization directions of the polarizing plate and the retardation plate is adjusted to π/4, it gives a circularly polarized light.

This circularly polarized light is transmitted through the transparent substrate, the transparent electrode and the organic thin film, and is reflected by the metal electrode, and then is transmitted through the organic thin film, the transparent electrode and the transparent substrate again, and is turned into a linearly polarized light again with the retardation plate. And since this linearly polarized light lies at right angles to the polarization direction of the polarizing plate, it cannot be transmitted through the polarizing plate. As the result, mirror surface of the metal electrode may be completely covered.

Examples and so on are described below for specifically showing the features and effects of the invention.

### (Water-Vapor Permeability)

According to the JIS Z 0208 water-vapor permeability test (cup method), the water-vapor permeability of the transparent protective film was measured as the gram weight of water vapor passing through the sample with an area of 1 m² for 24 hours in an atmosphere at a temperature of 40°C and a humidity of 92%RH.

### (Contact Angle)

The contact angle of the surface of the polarizer for water was measured with an automatic contact angle meter Model CA-V (manufactured by Kyowa Interface Science Co., Ltd.).

### (Moisture Content of Polarizer and Polarizing Plate)

A sample (100 x 100 mm in size) was cut from the polarizer or the polarizing plate, and the initial weight of the sample was measured. The sample was then dried at 120°C for 2 hours and measured for dry weight. The moisture content was determined according to the following formula: moisture content (% by weight) = {(the initial weight-the dry weight) / the initial weight} x 100. The measurement of each weight was performed three times, and the average value was used.

### Example 1

### (Preparation of Polarizer)

An 80 µm-thick polyvinyl alcohol film was dyed in an aqueous solution of 5% by weight iodine (iodine/potassium iodide = 1/ 10 in weight ratio). Thereafter, the film was immersed in an aqueous solution containing 3% by weight of boric acid and 2% by weight of potassium iodide, and then stretched to 5.5 times in an aqueous solution containing 4% by weight of boric acid and 3% by weight of potassium iodide. Thereafter, the film was immersed in an aqueous solution of 5% by weight of potassium iodide and stretched. A counter flow method was then used to blow air at a blowing speed of 3 m/ second for 5 minutes on both sides of the resulting film (at a distance of 30 cm from the air blowing means) in an environment at 30°C so that a 30 µm-thick polarizer was obtained. The resulting polarizer had a moisture content of 25%.

### (Adhesive)

At a temperature of 30°C, 100 parts of a polyvinyl alcohol-based resin (with an average degree of polymerization of 1200 and a degree of saponification of 98.5 mol%) and 30 parts of methylolmelamine were dissolved in pure water to form an aqueous solution with an adjusted solids content of 3.7%. The aqueous solution was used as an adhesive.

### (Preparation of Polarizing Plate)

A norbornene resin film (with a thickness of 40 µm and a water-vapor permeability of 6 g/m²/24 hours, Zeonor (trade name), manufactured by Zeon Corporation) was used as a transparent protective film. The polyvinyl alcohol-based adhesive was applied to one side of the transparent protective film such that the adhesive layer would have a thickness of about 55 nm after drying. At a temperature of 23°C, the adhesive-coated transparent protective film was bonded to both sides of the polarizer in a roller machine, and the laminate was then dried at 55°C for 6 minutes to give a polarizing plate. The resulting polarizing plate had a moisture content of 3% by weight.

### Examples 2 to 4 and Comparative Examples 1 to 3

Polarizers were prepared using the process of example 1, except that the blowing speed was changed as shown in table 1. The contact angle and the moisture content of each of the resulting polarizers are shown in table 1. Polarizing plates were prepared using the process of example 1, except that the polarizer obtained in each example was used instead. The moisture content of each of the resulting polarizing plates is shown in table 1.

### Comparative Example 4

A polarizer was prepared using the process of example 1, except that when the polarizer was prepared, drying at 30°C for 5 minutes was performed as a drying process in place of the air blowing process. The contact angle and the moisture content of the resulting polarizer are shown in table 1. A polarizing plate was prepared using the process of example 1, except that the resulting polarizer was used instead and that a triacetylcellulose film (with a thickness of 40 µm and a water-vapor permeability of 500 g/m²/24 hours) was used instead as the transparent protective film. The moisture content of the resulting polarizing plate is shown in table 1.

### Comparative Example 5

A polarizer was prepared using the process of example 1, except that when the polarizer was prepared, drying at 40°C for 5 minutes was performed as a drying process in place of the air blowing process. The contact angle and the moisture content of the resulting polarizer are shown in table 1. A polarizing plate was prepared using the process of example 1, except that the resulting polarizer was used instead. The moisture content of the resulting polarizing plate is shown in table 1.

### (Evaluations)

The polarizing plates obtained in the examples and the comparative examples were evaluated as described below. The results are shown in table 1.

### (Polarization Degree)

Each polarizing plate was stamped into two 2 cm x 2 cm pieces. The pieces were laminated in such a manner that their absorption axes perpendicular each other, and the laminate was measured for polarization degree with a spectrophotometer (DOT-3 (product name) manufactured by Murakami Color Research Laboratory).

### (Resistance to Heat and Humidity)

The resulting polarizing plate sample was immersed in hot water at 60°C for 3 hours, and then the amount (mm) of peeling of the edge portion of the sample was measured. The amount (mm) of peeling was measured using a vernier caliper and a metal measure.

**Table 1**

| | Transparent Protective Film | Air Blowing Process | | | Polarizer | | Polarizing Plate | Adhesive Layer Thickness (nm) | Evaluations | |
|---|---|---|---|---|---|---|---|---|---|---|
| | Water-vapor Permeability (g/m²/24h) | Blowing Speed (m/s) | Temperature (°C) | Time (minutes) | Contact Angle (°) | Moisture Content (%) | Moisture Content (%) | | Polarization Degree (%) | Resistance to Heat and Humidity (nm) |
| Example 1 | 6 | 3 | 30 | 5 | 20 | 25 | 3 | 55 | 99.95 | 0 |
| Example 2 | 6 | 5 | 30 | 5 | 23 | 23 | 3 | 57 | 99.96 | 0 |
| Example 3 | 6 | 7 | 30 | 5 | 27 | 20 | 2.8 | 56 | 99.97 | 0.5 |
| Example 4 | 6 | 10 | 30 | 5 | 30 | 19 | 2.8 | 56 | 99.95 | 0 |
| Comparative Example 1 | 6 | 1 | 30 | 5 | 17 | 30 | 3.3 | 72 | 99.93 | 0.5 |
| Comparative Example 2 | 6 | 0 | 30 | 5 | 16 | 32 | 3.5 | 72 | 99.92 | 0.5 |
| Comparative Example 3 | 6 | 11 | 30 | 5 | - | - | - | - | - | - |
| Comparative Example 4 | 500 | 0 | 30 | 5 | 16 | 32 | 3.5 | 74 | 99.92 | 0.5 |
| Comparative Example 5 | 6 | 0 | 40 | 5 | 18 | 25 | 3.1 | 75 | 99.93 | 0.5 |

As is apparent from table 1, in each example using a less water-vapor-permeable material for the transparent protective film, the resulting polarizing plate had good resistance to heat and humidity, and in the process of manufacturing the polarizer, the air blowing process was performed such that the contact angle of the surface of the polarizer for water was controlled to 20° or more, so that the resulting polarizing plate had a high polarization degree. In comparative examples 1 and 2, the surface of the polarizer had a contact angle of less than 20° for water, and thus the polarization degree was lower than that in each example. In comparative example 3, the blowing speed was so high that rapture of the polarizer occurred to make it impossible to form a polarizer film. The adhesive layer was thicker in the comparative examples each using a polarizer with a relatively high moisture content than in the examples. It is expected that this is because if the polarizer is small and specifically if the polarizer has a relatively high moisture content, water can move from the polarizer to the adhesive layer so that the component of the adhesive can swell to have an increased thickness.

## Claims

1. A method for producing a polarizing plate, comprising a step of bonding a transparent protective film to at least one side of a polarizer with an adhesive, wherein
the polarizer is a polyvinyl alcohol-based polarizer,
the transparent protective film has a water-vapor permeability of 150 g/m²/24 hours or less,
the adhesive is a water-based adhesive, and
before bonding the polarizer and the transparent protective film with the adhesive, the polarizer is subjected to an air blowing process such that the surface of the polarizer has a contact angle of 20° or more for water.

2. The method according to claim 1, wherein the adhesive forms a layer with a thickness of 30 nm to 200 nm.

3. The method according to claim 1 or 2, wherein the air blowing process is performed by blowing air at a speed of 2 to 10 m/second on the polarizer.

4. The method according to any one of claims 1 to 3, wherein the air blowing process is controlled such that the resulting polarizer has a moisture content of 10% to 40% by weight.

5. A polarizing plate produced by the method according to any one of claims 1 to 4.

6. An optical film, comprising at least one laminated piece of the polarizing plate according to claim 5.

7. An image display, comprising the polarizing plate according to claim 5 or the optical film according to claim 6.
